# EUROPEAN PATENT APPLICATION

(11) **EP 1 648 113 A2**
(43) Date of publication of application: **19.04.2006**
(21) Application number: 05109154.4
(22) Date of filing: 03.10.2005
(51) Int. Cl.: H04L 12/26

(54) **Probe apparatus and method therefor**

(30) Priority: 14.10.2004 GB 0422818
(71) Applicant: Agilent Technologies, Inc. - a Delaware corporation -, Palo Alto, CA 94303-0870 (US)
(72) Inventor: Mitchelll, Kevin, South Queensferry, Lothian EH30 9TG (GB)
(74) Representative: Coker, David Graeme

(57) **Abstract**

In the field of monitoring of communications networks, it is known for probes to execute a combination of tests on an incoming packet stream. When modification of the combination of test is necessary, either by adding or removing a test, it is necessary to modify, externally to the probe, the combination of tests and then recompile the modified combination of tests. This process is inefficient, as it requires re-compilation every time the combination of tests is modified; it also requires execution of the combination of tests with consequential loss of test results while the compiled modified combination of tests is uploaded to the probe. The present invention provides a probe (110) having a test re-writer process (410) that applies optimisation rules to re-structure an aggregate test (202). The optimisation rules are applied either to attempt to make tests to be added share test elements of the current combination of tests without altering the semantics of current tests, or to factor out a test to be removed, without altering the semantics of the remaining tests of the aggregate test.

## Description

The present invention relates to a probe apparatus of the type, for example, that receives copies of packets, such as IP packets, and performs tests on the received packets in order to generate network performance statistics. The present invention also relates to a method of modifying an aggregate test.

In the field of data communications, units of data are communicated between devices having respective source and destination addresses in a high-speed communications network. Throughout the communications network, and between the devices, so-called "routers" are interconnected to, as their name suggests, route or forward the units of data from a device having the source address to a device having the destination address as they pass from router to router. The packets comprise a number of headers, each relating to different layers of a communications protocol stack. Some parts of headers can also relate encapsulated data units.

It is, of course, known to monitor traffic in the communications network for the purpose of supporting traffic engineering applications or accounting applications. In this respect, it is desirable to observe and characterise data units known as "packets", in particular IP packets, which flow across an interface of a given router within a core of the high-speed communications network.

One simple form of analysis involves breaking a stream of incoming packets into flows of packets and counting the number of packets and bytes associated with each flow. The flows can be defined in any number of ways, for example source port-destination port tuples, or Multi-Protocol Label Switching (MPLS) Label Switched Paths (LSPs). Indeed, many known packet-processing engines extract such flow information from streams of packets, particularly in relation to a Quality of Service (QoS) enabled network that handles flows of packets in accordance with respective QoS criteria associated with the flows of packets. Typically, there may be few technical problems involved in building a probe to perform such analysis tasks at line-rate, i.e. the rate at which packets flow across the interface of the given router. When the probe is embedded in the given router, it may even be possible to make use of the existing packet processor of the given router to perform some of the processing necessary to carry out the analysis tasks.

However, certain, more complex, analysis tasks for a link in the communications network require analysis of parts of packet headers corresponding to higher layers of the protocol stack than layers analysed in the performance of the simpler analysis tasks already described above. In such circumstances, the processing required is above that associated with pure packet forwarding; performance of the more complex analysis tasks at the line-rate becomes too demanding for the processing power of the given router. Further, when the scope of analysis tasks is more open-ended, i.e. adaptable, performance of the analysis tasks by software applications is necessary. However, software applications do not execute sufficiently fast to perform the analysis tasks on many high-speed communications links.

One known alternative solution is a hybrid approach and involves sampling packets from the flows of packets originating from the stream of packets. This effectively "decouples" the analysis tasks from the data rate of the flows of packets, enabling exploitation of a range of processing techniques albeit with the introduction of varying bounded statistical uncertainty in the results obtained. The stream of packets is split into flows of packets by hardware and accurate byte and packet counts are maintained for each flow of packets. Subsequently, the hardware samples packets for each flow, a respective sampling rate existing for each flow of packets, and the sampled packets are passed to a software application for further analysis. However, in order to maintain pace with the fastest routers in the communications network, definitions of flows used when splitting the flow of packets must not be more complex than the most complex definition used by the routers themselves to classify packets to satisfy QoS differentiation of flows requirements.

In order for sampled packets to be characterised and aggregated in many different ways, as is required depending upon intended usage of results of the characterisation and aggregation, one or more individual tests to achieve the analysis task need to be re-configurable at run-time so as to be able to adapt to current needs of consumers of results of the analysis.

Whilst for some types of analysis the types of tests required are known, there are circumstances when this is not the case and tests need to be deployed in a more flexible way through a predetermined pool of tests. For such circumstances, the most powerful and flexible strategy to employ involves the incremental loading of code into the probe.

The ability to load new classes into a running application for the purpose of creating new instances of an uploaded class and calling methods of the newly created instances, known as a "dynamic class loading" technique, yields high processing speeds for individual tests. However, where it is necessary to deploy multiple tests on a same flow of packets each test typically "drills" down into a given packet header until one or more fields of interest are found. Typically, application of multiple tests on a same packet results in some duplication of initial, or "top-level", packet processing for some individual tests.

Also, where a consumer of test results requires multiple tests to be performed on a same stream of packets, it is conceivable that an aggregate test is deployed encapsulating the functionality of all of the individual tests required by the consumer. However, where it is necessary to add a new test to an existing aggregate test, a disadvantageously bulky download of a new compound test would be required. This problem is exacerbated where multiple consumers are allowed to deploy tests on the same single flow, the difficulty in optimising the multiple tests becoming harder.

According to a first aspect of the present invention, there is provided a probe apparatus for a communications network, the apparatus comprising: a processing resource for implementing an aggregate test constituted from a plurality of individual tests, the processing resource being capable of receiving an instruction to modify the constitution of the aggregate of test; wherein the processing resource supports a test modifier for modifying, when in use, the aggregate test in response to the instruction so as to create a modified aggregate test, and an optimiser for re-writing the modified aggregate test with respect to a predetermined optimisation goal so as to create an optimised modified aggregate test for implementation by the processing resource.

Semantics may be associated with the modified aggregate test, the optimiser may be arranged to preserve the semantics of the modified aggregate test.

The processing resource may be arranged to modify, when in use, the combination of tests and implement the modified combination of tests prior to implementation of the modified and optimised combination of tests.

The optimiser may be arranged to re-write, when in use, the modified aggregate test or the optimised aggregate test during implementation of the modified aggregate test or the optimised aggregate test, respectively.

The modification or re-writing may take place between processing steps during implementation.

The apparatus may further comprise a data store for storing the plurality of individual tests.

The aggregate test and the plurality of individual tests may be rooted directed graphs of elements.

At least one of the plurality of individual tests may comprise an interconnected combination of datagram processing elements. The at least one of the datagram processing elements may be a classifier. At least one of the datagram processing elements may be a Tee.

According to a second aspect of the present invention, there is provided a router apparatus comprising the probe apparatus as set forth above in relation to the first aspect of the present invention.

According to a third aspect of the present invention, there is provided a network monitoring system comprising the router apparatus or the probe apparatus as set forth above in relation to the first and/or second aspects of the present invention.

According to a fourth aspect of the present invention, there is provided a method of modifying an aggregate test for implementation on a stream of datagrams, the method comprising the steps of: implementing the aggregate test, the aggregate test being constituted from a plurality of individual tests; receiving an instruction to modify the constitution of the aggregate test; modifying the aggregate test in response to the instruction so as to create a modified aggregate test; re-writing the modified aggregate test with respect to a predetermined optimisation goal so as to create an optimised modified aggregate test; and implementing the optimised modified aggregate test.

According to a fifth aspect of the present invention, there is provided a computer program code element comprising computer program code means to make a computer execute the method as set forth above in relation to the fourth aspect of the present invention.

The computer program element may be embodied on a computer readable medium.

According to a sixth aspect of the present invention, there is provided a use of a language for expressing a rooted directed graph constituting an aggregate test in combination with a test modifier and an optimiser to modify and re-write the aggregate test substantially without halting processing of datagrams processed in accordance with the aggregate test.

It is thus possible to provide a probe apparatus and a method of modifying an aggregate test that enables modification of the aggregate test in real-time substantially without having to halt processing of incoming datagrams. Further flexibility is also achieved in that substantial downloads of pre-optimised aggregate tests is avoided as is loss of test data, for example byte or packet counts, associated with tests being implemented at the time of simple replacement of a given aggregate test with a modified aggregate test. Processor-intensive compilation of code to merge or de-merge tests is therefore also avoided, and efficiency of execution of tests is improved through sharing of test elements, thereby avoiding repetition of common processing steps for different individual tests constituting the aggregate test.

At least one embodiment of the invention will now be described, by way of example only, with reference to the accompanying drawings, in which:
**Figure 1** is a schematic diagram of interconnected routers in overview;
**Figure 2** is a schematic diagram of a probe apparatus for monitoring packets in a link between a pair of routers of Figure 1;
**Figure 3** is a schematic diagram of a combination of tests to be carried out on packets of Figure 2;
**Figure 4** is a schematic diagram of the probe apparatus of Figure 2 in greater detail;
**Figure 5** is a schematic diagram of a re-writing of a simple exemplary combination of tests;
**Figure 6** is a schematic diagram of another re-writing of another simple exemplary combination of tests; and
**Figure 7** is a flow diagram of a method for use with the apparatus of Figure 4.

Throughout the following description, identical reference numerals will be used to identify like parts.

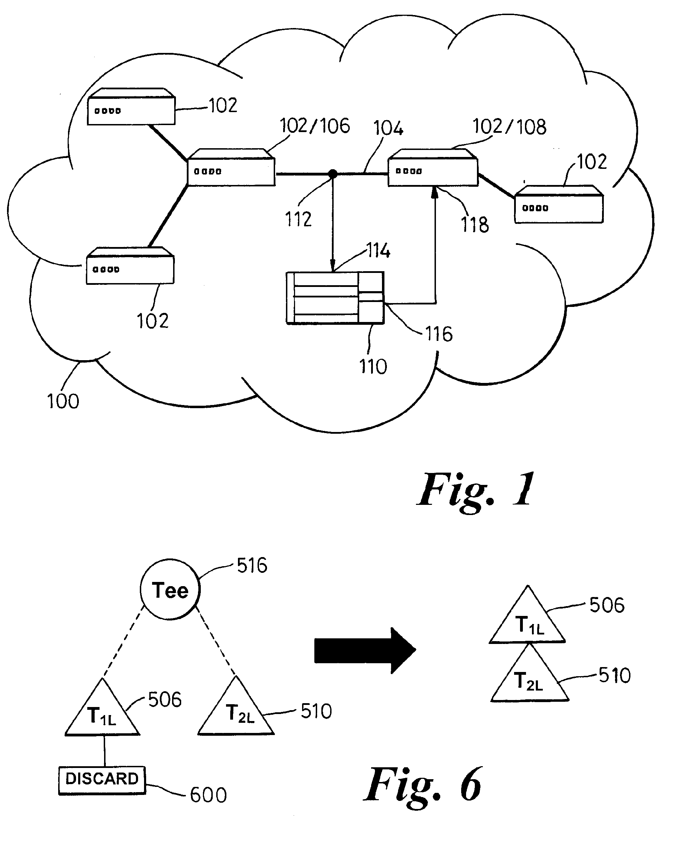

Referring to Figure 1, an IP network, for example an IP backbone network 100, comprises a plurality of interconnected high-speed routers 102. A link 104 between a first router 106 and a second router 108 of the plurality of high-speed routers 102 is coupled to a probe 110 by means of a tap 112, an electrical or optical connection to the link 104 in order to "siphon-off" a copy of electrical or optical signals communicated along the link 104 so as to enable the probe 110 to monitor communications between the first and second routers 106, 108. The tap 112 is coupled to an input 114 of the probe 110, an output 116 of the probe being coupled to a packet input port 118, such as an Ethernet port of the second router 108.

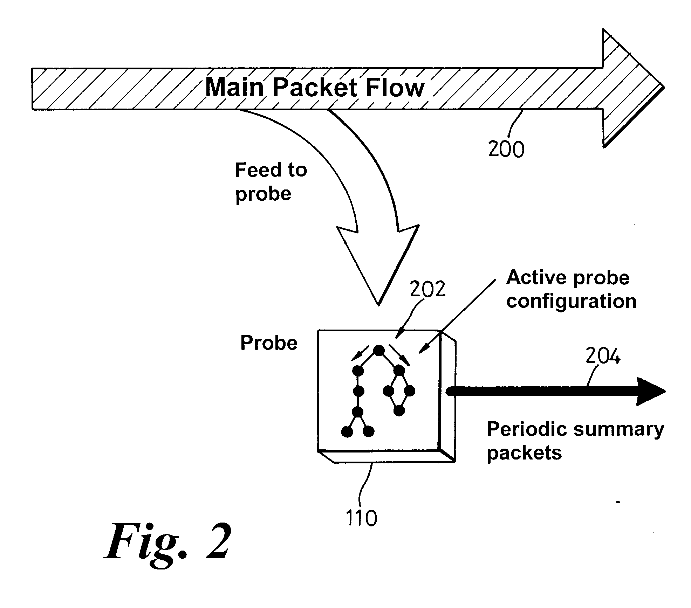

Turning to Figure 2, the probe 110 is used by, for example, one or more groups of network operators, such as a group supporting Voice over IP traffic and/or another group responsible for maintenance of customer websites, to make a number of measurements in relation to a main flow of packets 200 communicated between the first and second routers 106, 108. The number of measurements is performed as an aggregate test 202 that constitutes an analysis task. The probe 110 is also capable of generating summary packets 204 constituting summary messages.

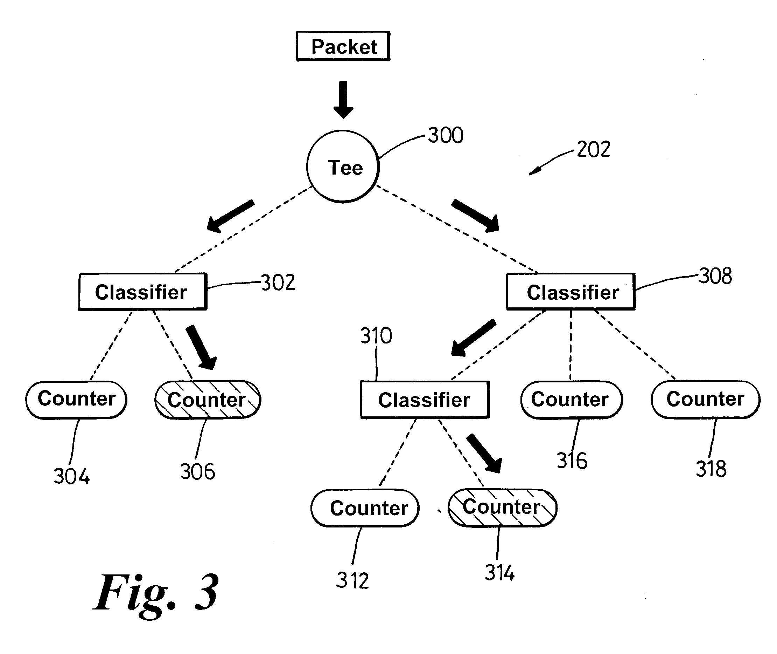

In one example (Figure 3), the aggregate test 202 comprises a Tee element 300, having an input for receiving packets. The Tee element 300 is coupled to a first classifier element 302, the first classifier element 302 being coupled to a first counter element 304 and a second counter element 306. The Tee element 300 is also coupled to a second classifier element 308, the second classifier element 308 being coupled to a third classifier element 310 that is coupled to a third counter element 312 and a fourth counter element 314. The second classifier element 308 is also coupled to a fifth counter element 316 and a sixth counter element 318.

The aggregate test 202 is therefore represented by a rooted acyclic directed graph of elements, each of which performs a respective function in relation to packets. In this example, the aggregate test 202 is written in an adapted version of the "Click" configuration language, as described in "The click modular router" (E. Kohler, R. Morris, B. Chen, J. Jannotti, and M. Frans Kaashoek, ACM Transactions on Computer Systems, 18(3):263-297, August 2000) and www.pdos.lcs.mit.edu/click/. The Click configuration language is a language to develop modular software routers, but can also be used to perform the combination of tests 202. However, it should be appreciated that any suitable programming language can be used to implement the aggregate test 202.

The aggregate test 202 can be perceived as a tree, or more generally as the rooted acyclic directed graph as described above, having branches subtending from Tee elements and classifier elements, the counter elements constituting leaves of the tree. In this respect, the behaviour of the graph, i.e. the way in which states (for example, the counters) of the graph are modified, on reception of a packet defines the semantics of the graph. The aggregate test 202 comprises an arrangement of individual tests such that any given packet flowing through the tree has a definite path through the tree that can be followed. In relation to the aggregate test 202 of Figure 3, the Tee element 300 sends a copy of received packets to each child coupled to the Tee element 300, whereas the first, second and third classifier elements 302, 308, 310 serve to direct packets along predefined branches of the tree in response to certain characteristics of the packets being processed. In this respect, each classifier element is preprogrammed to output packets to outputs of the classifier elements dependent upon certain characteristics of the packets, for example IP packets or non-IP packets. The counter elements simply count packets received from the classifier elements to which they are coupled, thereby counting packets having the characteristic identified by the classifier elements providing the packets.

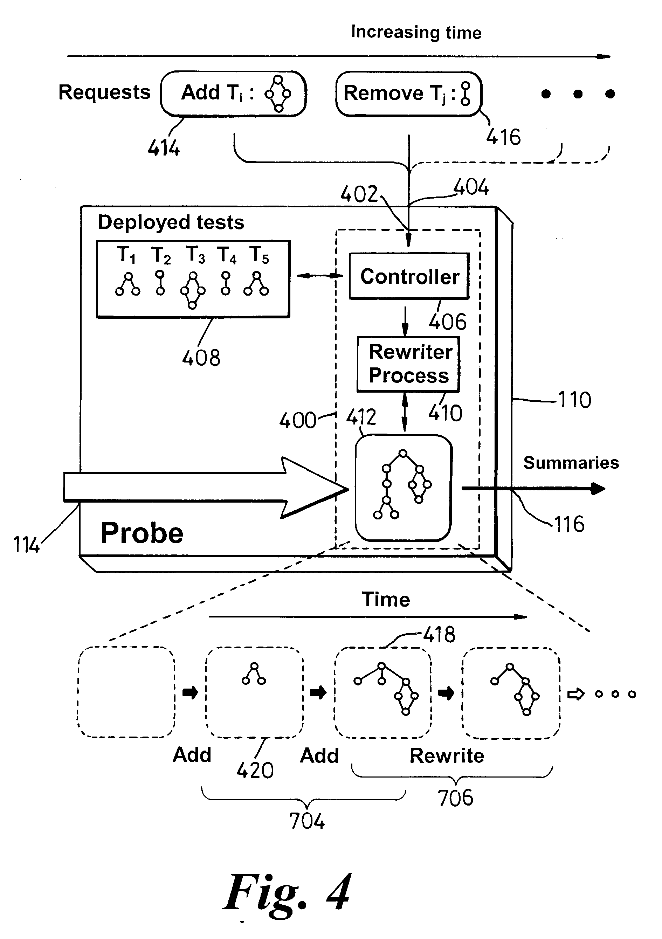

Referring to Figure 4, the probe 110 comprises a processing resource 400, such as a microprocessor, having an input 402 coupled to an input port 404 of the probe 110. The processing resource 400 supports a controller process 406 capable of retrieving data from and storing data to a storage device 408 of the probe 110. The storage device 408 is capable of storing individual tests that, when combined as a graph of the individual tests is semantically equivalent to the aggregate test 202. In this example, the storage device 408 is, for the purposes of speed, a memory device.

The processing resource 400 also supports a test re-writer process 410, the test re-writer process 410 being capable of communicating with the controller process 406. The test re-writer process 410 is also capable of interacting with a test execution process 412 that is also supported by the processing resource 400. The test execution process 412 has access to the input 114 of the probe 110 as well as the output 116 of the probe 110.

The controller process 406 serves to modify the aggregate test 202 by applying a set of modification rules, in a non-semantic preserving way, so as to add or remove an individual test from the aggregate test 202. The test re-writer process 410 serves to optimise the aggregate test 202 upon addition of one or more test to the aggregate test 202 or prior to removal of one or more test from the aggregate test 202. In this respect, the test re-writer process 410 has a first set of rules relating to operations that can be carried out on a set of interconnected tests to achieve a first predetermined optimisation goal in relation to addition of one or more test to the aggregate test 202. In this example, the first optimisation goal is to minimise tree or graph depth, for example by removing redundant or superfluous elements. Also, the test re-writer process 410 has a second set of rules relating to operations than can be carried out on a set of interconnected tests to achieve a second predetermined optimisation goal in relation to removal of one or more test from the aggregate test 202. In this example, the second optimisation goal is to minimise tree depth or graph depth, for example by removing redundant or superfluous elements, whilst "factoring out" or isolating a given individual test from the aggregate test 202. Whilst optimisation rules exist for the click modular router described above, the first and second set of rules used herein differ in that they relate specifically to the manipulation of aggregate tests being executed by the test execution process 412, and the optimisations are being performed whilst the aggregate test 202 is being executed, i.e. the performance of the aggregate test 202 is not halted or taken off-line to re-write the aggregate test 202 following an instruction to add or remove one or more test to or from the aggregate test 202.

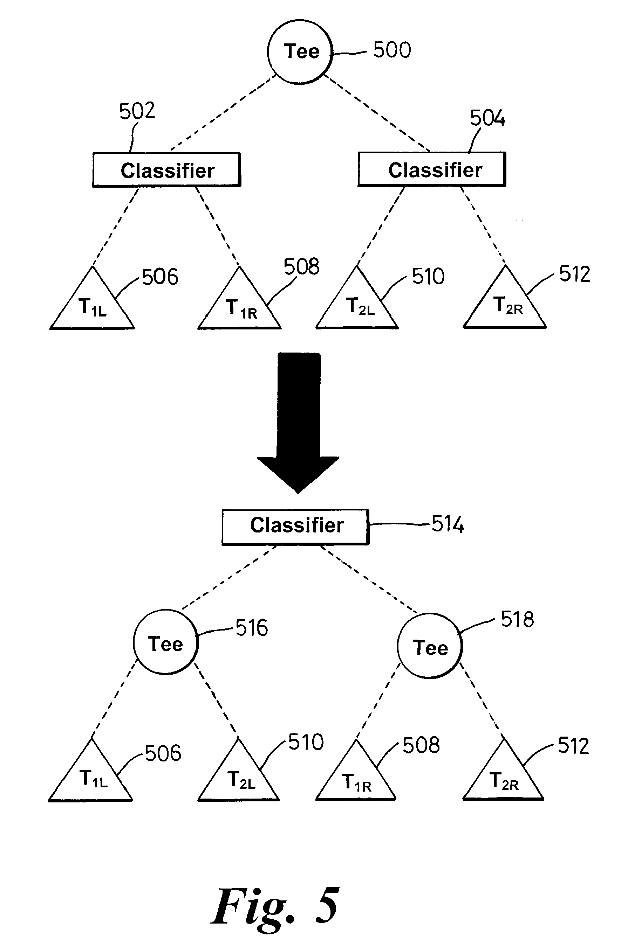

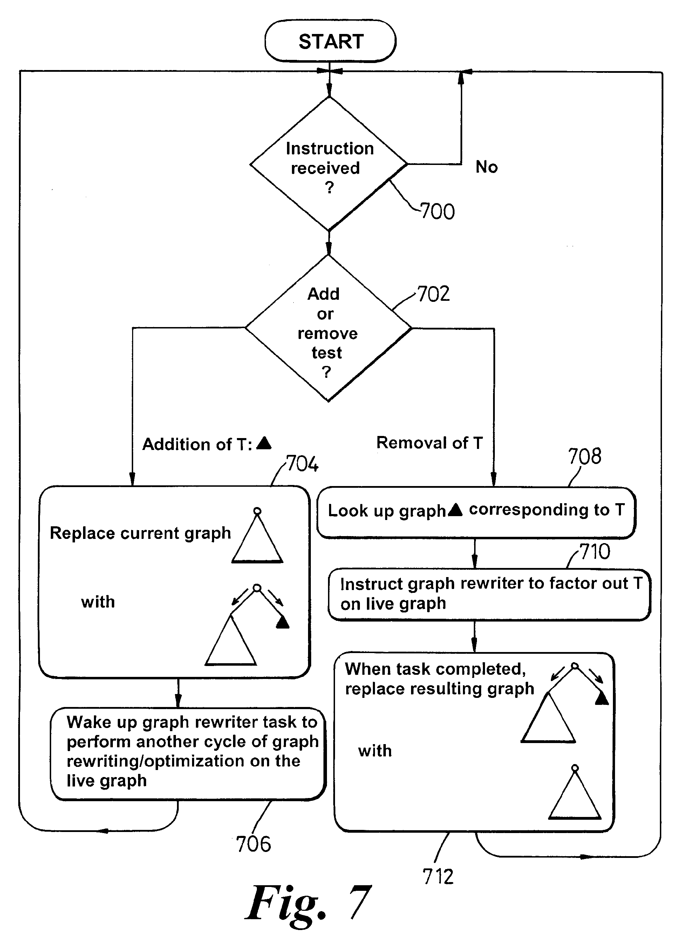

To describe a full set of optimisation rules, or indeed a whole test description language, herein would unnecessarily complicate this description of an example of the invention. Therefore, in order to maintain simplicity and conciseness of description, two simple examples of the functionality performed by the modification rules are set out below in relation to Figures 5 and 6. It should therefore be appreciated that other, sometimes more complex, sets of tests to be optimised can exist. In such circumstances, the modification rules for the sets of tests are relatively complex in order to take into account the complexities of the context of the sets of tests, since preservation of the semantics of the sets of tests is important.

For a pair of individual tests, T₁ and T₂, each comprising one or more test elements, instead of executing each of these individual tests, T₁ and T₂, individually in respect of a stream of packets 200, a Tee element 500 can be used to combine the pair of individual tests T₁, T₂ into the aggregate test 202 suitable for execution on the stream of packets. The Tee element 500 sends a copy of each incoming packet to each of its children. In this example, a first classifier element 502 and a second classifier element 504 are each coupled to the Tee element 500. The first classifier element 502 is coupled to a first sub-graph 506 and a second sub-graph 508 and together they constitute the first individual test, T₁. The first and second sub-graphs 506, 508 can each comprise one or more respective test elements. The second classifier element 504 is coupled to a third sub-graph 510 and a fourth sub-graph 512 and together they constitute the second individual test, T₂. The third and fourth sub-graphs 510, 512 can also each comprise one or more respective test elements.

In this example, the first individual test T₁ implements a count of Internet Protocol (IP) packets, the second individual test T₂ implementing a count of non-IP packets. Consequently, the first sub-graph 506 updates a counter every time an IP packet is encountered by the first sub-graph 506, and the second sub-graph 508 discards all non-IP packets, i.e. the second sub-graph 508 is simply a so-called "discard node". Similarly, the third sub-graph 510 is a discard node as well, but for IP packets, and the fourth sub-graph 512 updates a counter every time a non-IP packet is encountered. The first classifier element 502 therefore directs IP packets to the first sub-graph 506 and non-IP packets to the second sub-graph 508. Similarly, the second classifier element 504 directs IP packets to the third sub-graph 510 and non-IP packets to the fourth sub-graph 512.

It can be seen that if the first individual test T₁ were being executed by the test execution process 412 when the second individual test T₂ needed to be added to the first individual test T₁, then the controller process 406 applies the set of modification rules to concatenate the first and second individual tests T₁, T₂ using the Tee element 500, the resulting structure again being that of a rooted directed graph constituting the aggregate test 202. In order to simplify the combined pair of individual tests T₁, T₂, the first set of optimisation rules are applied by the test re-writer process 410 so as to , as a first step, immerse the functionality of the Tee element 500 down one level in the tree structure and providing a single classifier element 514 as the uppermost node, or root, of the tree structure. Consequently, a first Tee element 516 and a second Tee element 518 replace the first and second classifier elements 502, 504, respectively.

The single classifier element 514 is therefore coupled to the first Tee element 516 and the second Tee element 518. As a next step, the first set of optimisation rules, when applied, require that the first sub-graph 506 and the third sub-graph 510 are coupled to the first Tee element 516, whilst the second sub-graph 508 and the fourth sub-graph 512 are coupled to the second Tee element 518. Since the third sub-graph 510 is a discard element, and is coupled to the first Tee element 516, the third sub-graph 510 can be removed, because any branch of a Tee element that is coupled to a discard element can be removed. Further, a Tee element coupled to a single "child" element can simply be replaced by the child element. Hence, since the third sub-graph 510, and similarly the second sub-graph 508 are superfluous, the first Tee element 516, the first sub-graph 506 and the third sub-graph 510 can be replaced by the first sub-graph 506, and the second Tee element 518, the second sub-graph 508 and the fourth sub-graph 512 can be replaced by the fourth sub-graph 512. Hence, although not shown in Figure 5, the single classifier element 514 is therefore, after optimisation, coupled to the first sub-graph 506 and the fourth sub-graph 512 only.

For the above described optimisation, it should be appreciated that the first set of optimisation rules have to take into account graphical context of elements being replaced or moved as part of the optimisation process, thereby preserving the semantics of the pair of individual tests T₁, T₂ (the aggregate test 202). Similarly, in respect of the second set of optimisation rules, account is taken of the graphical context of elements being replaced, added, removed or moved as part of the optimisation process so as to preserve the semantics of the aggregate test 202.

An advantage of the above optimisation is that a single classification element can replace the presence of two classifier elements, thereby reducing the processing overhead required by the aggregated pair of individual tests T₁, T₂. Additionally, the discard nodes are rendered redundant.

In general, any given aggregate test has a single entry point (or root) for initial packet input and typically one or more discard elements at the bottom of a graph (or leaves of a tree) constituting the aggregate test to process packets injected into a given sub graph, for example branch, of the aggregate test 202. An example of such a structure is the first Tee element 516 coupled to the first and third sub-graph 506, 510 as described above. In such circumstances, another optimisation is sometimes possible.

Referring to Figure 6, the third sub-graph 510 has been modified so that it is not a discard element, but instead another sub-graph, and a test element 600 is coupled to the first sub-graph 506; the test element 600 is a discard element.

In order to optimise the arrangement of test elements of this second example, it should be understood that any packet entering the first test element 506 is eventually passed to the another discard element 600, unchanged. Depending upon context and the exact elements constituting the first and third sub-graph 506, 510, in some circumstances the fact that packets processed by the first sub-graph 506 remain unchanged allows the first and third sub-graph 506, 510 to be composed sequentially, thereby again avoiding the need for the first Tee element 516 and the another discard element 600. As mentioned above, the optimisation is sometimes possible and depends upon the exact elements making up the first and third sub-graph 506, 510.

In a more complex example, many paths may exist through the first sub-graph 506, each leading to a discard element, or some other element that discards packets. Consequently, branches of the first sub-graph 506 are generated by variants of the classifier element so that each packet only follows a single path through the first sub-graph 506. Therefore, when optimising aggregate tests, the optimisation rules ensure that every packet passing through a given graph or sub-graph reaches a single discard element at the fringe of the given graph or sub-graph. Assuming packets reaching the discard elements are not modified, the discard elements would then be removed and replaced by respective links to the beginning of the third sub-graph 510.

Turning now to Figures 4 and 7, in operation a number of requests are transmitted to the probe 110 from one or more different sources corresponding to one or more different consumers. In some circumstances, a single consumer implements and modifies multiple individual tests on a given link, whereas in other circumstances, more than one consumer implements one or more individual tests on the given link. Consequently, each consumer has a need to add or remove tests, for example, a first request 414 is sent from a first consumer (not shown) and received via the input port 404 of the probe 110. In addition, a second request 416 is sent by a second consumer (not shown) and again received by the probe 110 via the input port 404.

In this example, the test execution process 412 executes the aggregate test 202 formed from a number of individual tests. Each request received includes an individual test to be added to or removed from the aggregate test 202 being executed by the test execution process 412. In relation to removal of individual tests, the request can simply be a reference to the individual test to be removed. Additionally, to avoid abuse of the ability of the probe 110 to accept requests to modify the aggregate test 202, each request can include an authentication component to identify the authenticity of an originator of a received request as an owner of the individual test to be added or removed. This approach also avoids any given consumer accidentally adding or removing tests that do not belong to the consumer.

Referring to Figure 7 in particular, the controller process 406 awaits (Step 700) receipt of a request, for example the first or second requests 414, 416. Upon receipt of the request, the controller process 406 determines (Step 702) whether the received request is a request to add a test or a request to remove a test.

If the received request is the first request 414, i.e. a request to add a test, the controller process 406 extracts a test to be added, Tᵢ, from the first request 414 and stores the test to be added, Tᵢ, in the storage device 408. Thereafter, the controller process 406 atomically modifies (Step 704) the aggregate test 202, the modified aggregate test 418, constituting a current graph 420 being executed by the test execution process 412, with a Tee element coupled to the current graph and the test to be added, Tᵢ. A modified current graph is therefore created and executed by the test execution process 412, without interruption of the execution of the aggregate test 202, or loss or corruption of test measurements.

In relation to the controller process 406, the atomic modifications are small, discrete, modifications made between packet processing steps of the test execution process 412. More particularly, the atomic modifications are made between processing steps relating to a given part of the current graph being executed by the test execution process 412. For example, if the test execution process 412 is processing a first branch of the aggregate test 202, then the atomic modifications can be made to a second branch of the aggregate test 202, whilst the first branch is being processed.

Once the current graph has successfully been modified, the controller process 406 instructs the re-writer process 410 to attempt to optimise the modified current graph with respect to the first predetermined optimisation goal. The re-writer process 410 then implements (Step 706) the first set of optimisation rules as atomic modifications, examples of the implementation of which have already been described above, in an attempt to maximise sharing of test elements by the modified current graph. In this respect, the re-writer process 410 in combination with the first set of optimisation rules attempts, inter alia, to "push" the Tee element, added at the root of the current graph to merge the test to be added, Tᵢ, to the current graph, down into the modified current graph. This and any other optimisation steps, either as described above in relation to the simple optimisation examples or otherwise, are carried out by the re-writer process 410.

In relation to the test re-writer process 410, the atomic modifications are small, discrete, semantic preserving modifications made between packet processing steps of the test execution process 412. More particularly, the atomic modifications are made between processing steps relating to a given part of the current graph being executed by the test execution process 412.

Consequently, the test execution process 412 is able to continue executing the optimised modified current graph on a stream of packets received via the input port 114 of the probe 110. Results of the tests executed by the test execution process 412 are then communicated to a central monitoring station (not shown) as summary messages, the summary messages being inserted into a flow of traffic processed by, in this example, the second router 108, via the packet input port 118 of the second router 108, for onward propagation to the central monitoring station.

If the received request is the second request 416, i.e. a request to remove a test Tⱼ, the controller process 406 accesses the storage device 408 to retrieve (Step 708) the test to be removed, Tⱼ. The controller process 406 then passes a copy of the test to be removed, Tⱼ, to the re-writer process 410 and instructs (Step 710) the re-writer process 406 to separate out the test to be removed, Tⱼ, from the current graph being implemented by the test execution process 412. The separating out of the test to be removed, Tⱼ, can be seen as a de-merger or de-optimisation of the aggregate test 202 being executed by the test execution process 412.

In order to factor out the test to be removed, Tⱼ, the re-writing process 410 applies the second set of optimisation rules defined to achieve the second predetermined optimisation goal, namely to isolate, or "factor out" the test to be removed, Tⱼ,. Isolation of the test to be removed, Tⱼ, also involves making necessary atomic modifications to the current graph being executed by the test execution process 412 so as to be able to extract the test to be removed, Tⱼ, from the current graph being executed without modifying the semantics of remaining aggregate test being executed. The atomic modifications are made to the current graph being executed between packet processing steps carried out by the test execution process 412 until a point is reached where a Tee element is a topmost element of the modified aggregate test, the modified current graph constituting one child of the Tee element and the test to be removed, Tⱼ constituting another child of the Tee element. Again, the atomic modifications are discrete, semantic preserving, changes made to one or more given part of the current graph being executed whilst the test execution process 412 is not processing the one or more given part of the current graph.

Upon successful isolation of the test to be removed, Tⱼ, the test to be removed, Tⱼ, and the Tee element that binds the test to be removed, Tⱼ, to the modified current graph are removed (Step 712) by the controller process 406, leaving the modified current graph. This can be achieved by simple manipulation of pointers. Consequently, the test execution process 412 continues executing the modified current graph on the stream of packets received via the input port 114 of the probe 110. Results of the tests executed by the test execution process 412 are also communicated to the central monitoring station in a like manner to that described above in relation to the test to be added, Tᵢ.

Whilst the above examples have been described in the context of packet communication, it should be appreciated that the term "packet" is intended to be construed as encompassing packets, datagrams, frames, cells, and protocol data units and so these term should be understood to be interchangeable.

It should also be understood that although the above examples relate to probes, the above same probe functionality can be embedded in other network elements, for example routers.

Reference herein is made to an "aggregate test", a "modified aggregate test", and an "optimised modified aggregate test". It should be appreciated that a name given to any graph depends upon its status within the various stages of processing described above. Hence, for example, an aggregate test once modified and optimised after addition of a test is an optimised modified aggregate test. However, from the perspective of removal of a test from a previously optimised modified aggregate test, the previously optimised modified aggregate test can be perceived simply as an aggregate test.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A probe apparatus (110) for a communications network, the apparatus comprising:
a processing resource (400) for implementing an aggregate test (202) constituted from a plurality of individual tests (T₁, T₂, T₃, T₄, T₅, Tᵢ, Tⱼ), the processing resource (400) being capable of receiving an instruction to modify the constitution of the aggregate test (202); wherein
the processing resource (400) supports a test modifier (406) for modifying, when in use, the aggregate test (202) in response to the instruction so as to create a modified aggregate test, and an optimiser (410) for re-writing the modified aggregate test with respect to a predetermined optimisation goal so as to create an optimised modified aggregate test for implementation by the processing resource (400).

2. An apparatus as claimed in Claim 1, wherein semantics are associated with the modified aggregate test, the optimiser (410) being arranged to preserve the semantics of the modified aggregate test.

3. An apparatus as claimed in Claim 1 or Claim 2, wherein the test modifier (406) is arranged to modify, when in use, the aggregate test (202) during implementation of the aggregate test (202).

4. An apparatus as claimed in Claim 1 or Claim 2, wherein the optimiser (410) is arranged to re-write, when in use, the modified aggregate test or the optimised aggregate test during implementation of the modified aggregate test or the optimised aggregate test, respectively.

5. An apparatus as claimed in Claim 3 or Claim 4, wherein the modification or re-writing takes place between processing steps during implementation.

6. An apparatus as claimed in any one of the preceding claims, further comprising a data store (408) for storing the plurality of individual tests (T₁, T₂, T₃, T₄, T₅, Tᵢ, Tⱼ).

7. An apparatus as claimed in any one of the preceding claims, wherein the aggregate test (202) and the plurality of individual tests (T₁, T₂, T₃, T₄, T₅, Tᵢ, Tⱼ) are rooted directed graphs.

8. An apparatus as claimed in any one of the preceding claims, wherein at least one of the plurality of individual tests (T₁, T₂, T₃, T₄, T₅, Tᵢ, Tⱼ) comprises an interconnected combination of datagram processing elements (300, 302, 304, ... , 318).

9. A router apparatus comprising the probe apparatus (110) as claimed in any one of the preceding claims.

10. A network monitoring system comprising the router apparatus or the probe apparatus (110) as claimed in any one of the preceding claims.

11. A method of modifying an aggregate test (202) for implementation on a stream of datagrams (200), the method comprising the steps of:
implementing the aggregate test (202), the aggregate test (202) being constituted from a plurality of individual tests (T₁, T₂, T₃, T₄, T₅, Tᵢ, Tⱼ);
receiving (700) an instruction (414, 416) to modify the constitution of the aggregate test (202);
modifying (704) the aggregate test (202) in response to the instruction so as to create a modified aggregate test;
re-writing (710) the modified aggregate test with respect to a predetermined optimisation goal so as to create an optimised modified aggregate test; and
implementing the optimised modified aggregate test.

12. A computer program code element comprising computer program code means to make a computer execute the method as claimed in Claim 11.

13. A computer program element as claimed in Claim 12, embodied on a computer readable medium.

14. A use of a language for expressing a rooted directed graph constituting an aggregate test in combination with a test modifier and an optimiser to modify and re-write the aggregate test substantially without halting processing of datagrams processed in accordance with the aggregate test.
